# EUROPÄISCHE PATENTANMELDUNG

(11) **EP 3 825 527 A1**
(43) Veröffentlichungstag der Anmeldung: **26.05.2021**
(21) Anmeldenummer: 19211267.0
(22) Anmeldetag: 25.11.2019
(51) Int. Cl.: F01N 3/02

(54) **NACHBEHANDLUNGSVORRICHTUNG UND ANLAGE ZUR NACHBEHANDLUNG VON ABGAS AUS EINEM VERBRENNUNGSMOTOR**

(71) Anmelder: Geerawor, Yuraj, 4310 Rheinfelden (CH)
(72) Erfinder: Geerawor, Yuraj, 4310 Rheinfelden (CH)
(74) Vertreter: Latscha Schöllhorn Partner AG

(57) **Zusammenfassung**

Vorrichtung zur Nachbehandlung von Abgas aus einem Verbrennungsmotor, die einen ersten Behälter (1) zur Aufnahme von Abgas, der einen Einlass (2) zum Einführen von Abgas aus dem Verbrennungsmotor und einen Auslass (3) zum Abführen von nachbehandeltem Abgas, und einen zweiten Behälter (4) mit einem Einlassanschluss (5) und einem Auslassanschluss (5) aufweist. Der erste Behälter (1) ist derart in dem zweiten Behälter (4) untergebracht, dass dessen Einlass (2) mit dem Einlassanschluss (5) und dessen Auslass (3) mit dem Auslassanschluss (6) verbunden ist. Ein Kältemedium ist in einem Innenraum (7) des zweiten Behälters (4) vorgesehen und zum Kühlen des ersten Behälters (1) derart ausgebildet, dass das in dem ersten Behälter (1) gesammelte Abgas von einem Ausgangszustand mit einem Ausgangsvolumen in einen nachbehandelten Zustand mit einem Volumen geringer als das Ausgangsvolumen überführbar ist. Weiter ist ein System zur Entsorgung von Abgas aus einem Verbrennungsmotor vorgesehen, das wenigstens eine Nachbehandlungsvorrichtung aufweist, die zur Entsorgung des nachbehandelten Abgases an wenigstens einen Entsorgungstank anschliessbar ist.

## Beschreibung

### Technisches Gebiet

Die Erfindung betrifft eine Nachbehandlungsvorrichtung zur Nachbehandlung von Abgas aus einem Verbrennungsmotor sowie ein System mit einer solchen Nachbehandlungsvorrichtung zur Entsorgung von Abgas aus einem Verbrennungsmotor. Insbesondere betrifft die Erfindung eine Nachbehandlungsvorrichtung zur Nachbehandlung von Abgas aus einem Verbrennungsmotor eines Fahrzeugs wie insbesondere eines Strassenkraftfahrzeugs.

### Stand der Technik

Die Verschmutzung der Umwelt, insbesondere der Luft, durch den freien Ausstoss von Abgasen aus Verbrennungsmotoren in die Umgebung ist weithin bekannt. Auf Grund von Erkenntnissen über deren Schädlichkeit für die Gesundheit, verschiedenste Ökosysteme und das Klima wird dieser Problematik zunehmend Beachtung geschenkt. Vielfach bestehen Vorschriften zum Betrieb von Verbrennungsmotoren, um den Ausstoss von Abgas in die Umwelt zu vermindern und zu kontrollieren. Entsprechend wurden Technologien entwickelt, um den Schadstoffanteil im freigesetzten Abgas, typischerweise die Anteile von Kohlenstoffmonoxid, Kohlenstoffdioxid, Stickoxiden und organischen Verbindungen, zu reduzieren.

Beispielsweise stehen Katalysatoren zur Verfügung, die an eine Auspuffanlage eines Kraftfahrzeugs angeschlossen werden und die Schadstoffanteile im Abgas vermindern. Der Katalysator beschleunigt die chemische Umwandlung von bei der Verbrennung entstehenden Schadstoffen in Wasser und Kohlendioxid. Beispielweise werden Stickoxide durch Reduktion in Stickstoff und Kohlenmonoxid durch Oxidation in Kohlendioxid umgewandelt. Ein solcher Katalysator ist beispielsweise aus der WO 2008/113561 A1 bekannt. Katalysatoren können jedoch den Schadstoffanteil lediglich reduzieren und sind nur für bestimmte Schadstoffanteile wirksam. Weiter müssen Katalysatoren für die jeweiligen Anforderungen eines bestimmten Verbrennungsmotors angepasst werden. Eine vollständige Vermeidung der Freisetzung von Schadstoffen in die Umgebung ist nicht möglich. Auch verbleiben im Abgas Schadstoffanteile, die mittels eines Katalysators nicht reduziert werden können, wie etwa Schwefelkomponenten oder Russpartikel.

Weiter sind zur Reinigung von Abgasen aus Verbrennungsmotoren Gaswäscher, auch Skrubber genannt, bekannt. In einem Gaswäscher wird das Abgas mit einer Flüssigkeit in Kontakt gebracht, sodass durch wiederholte Misch- und Trennvorgänge von flüssiger und gasförmiger Phase Schadstoffanteile des Abgases von der Flüssigkeit aufgenommen werden. Als Flüssigkeiten werden Waschflüssigkeit oder Lösungsmittel verwendet. Gaswäscher werden primär in der Schifffahrt eingesetzt, sind jedoch für Strassenkraftfahrzeuge aufgrund der Grösse und Komplexität der Gaswäscheranlage nicht geeignet.

Der vorliegenden Erfindung liegt daher die Aufgabe zu Grunde, eine Nachbehandlungsvorrichtung und ein System zur Nachbehandlung eines Abgases, bzw. dessen Schadstoffanteilen, aus einem Verbrennungsmotor zu schaffen, die eine Freisetzung von Abgasschadstoffen effizient vermindert, die Schadstoffe des Abgases möglichst vollumfänglich entsorgt, die eine einfache und platzsparende Bauweise aufweist und für den Einsatz bei verschiedenartigen Verbrennungsmotoren geeignet ist.

### Darstellung der Erfindung

Die Aufgabe wird erfindungsgemäss durch eine Nachbehandlungsvorrichtung zur Nachbehandlung von Abgas gelöst, wie sie durch die Merkmale des unabhängigen Anspruchs 1 definiert ist, sowie durch ein System zur Entsorgung von Abgas, wie es durch die Merkmale des unabhängigen Anspruchs 13 definiert ist, und eine Verwendung einer Nachbehandlungsvorrichtung, wie sie durch die Merkmale des unabhängigen Anspruchs 15 definiert ist. Vorteilhafte Ausführungsvarianten der Erfindung ergeben sich aus den abhängigen Ansprüchen.

Das Wesen der Erfindung besteht im Folgenden: Eine Nachbehandlungsvorrichtung zur Nachbehandlung von Abgas aus einem Verbrennungsmotor umfasst einen ersten Behälter zur Aufnahme von Abgas, ein Kältemedium und einen zweiten Behälter. Der erste Behälter kann als Abgassammelbehälter und der zweite Behälter als Kühlbehälter bezeichnet werden, wobei die Begriffe in der nachfolgenden Beschreibung alternativ zueinander verwendet werden. Der erste Behälter weist einen Einlass zum Einführen von Abgas aus dem Verbrennungsmotor und einen Auslass zum Abführen von nachbehandeltem Abgas auf. Der zweite Behälter ist mit einem Innenraum, einem Einlassanschluss und einem Auslassanschluss ausgestattet. Der erste Behälter ist im zweiten Behälter untergebracht. Der Einlass des ersten Behälters ist mit dem Einlassanschluss des zweiten Behälters verbunden und der Auslass des ersten Behälters mit dem Auslassanschluss des zweiten Behälters. Der Abgassammelbehälter weist somit eine Fluidverbindung durch den Kühlbehälter nach aussen aus dem Kühlbehälter auf. Das Kältemedium ist derart im Innenraum des zweiten Behälters vorgesehen, dass im ersten Behälter gesammeltes Abgas von einem Ausgangszustand mit einem Ausgangsvolumen in einen nachbehandelten Zustand mit einem Volumen geringer als das Ausgangsvolumen überführbar ist.

Die Nachbehandlungsvorrichtung gemäss der Erfindung kann vorteilhaft an eine Auspuffanlage eines Verbrennungsmotor-Kraftfahrzeugs angeschlossen werden, so dass das Abgas des Motors im Abgassammelbehälter aufgefangen werden kann. Da der Innenraum des Kühlbehälters mit Kältemedium gefüllt ist, das kühlend auf den Abgassammelbehälter wirkt, wird das aufgefangene Abgas gekühlt und verringert dadurch sein Volumen, so dass eine grosse Menge an Abgas, das während einem längeren Betrieb des Fahrzeugs anfällt, im Abgassammelbehälter aufbewahrt werden kann, da dessen Volumen dort reduziert wird. Der Abgassammelbehälter der Nachbehandlungsvorrichtung kann zum Beispiel entleert werden, sobald das Fahrzeug abgestellt wird, sodass das Fahrzeug für einen erneuten Einsatz bereit ist. Somit gelangen während des Gebrauchs des Fahrzeugs keinerlei Schadstoffe in die Umwelt. Vielmehr können diese fachgerecht aus dem Abgassammelbehälter entsorgt werden.

Ein weiterer Aspekt der Erfindung betrifft ein System zur Entsorgung von Abgas aus einem Verbrennungsmotor, das wenigstens eine Nachbehandlungsvorrichtung wie oben beschrieben und wenigstens einen Entsorgungstank umfasst. Vorteilhaft ist bei dem erfindungsgemässen System der Abgassammelbehälter der wenigstens einen Nachbehandlungsvorrichtung zur Entsorgung des nachbehandelten und in seinem Volumen reduzierten Abgases an den wenigstens einen Entsorgungstank anschliessbar. Somit kann das nachbehandelte Abgas in den Entsorgungstank abgeführt werden und ein Fahrzeug, das die erfindungsgemässe Nachbehandlungsvorrichtung verwendet, ist für weitere Fahrten einsatzbereit. Das nachbehandelte Abgas kann aus dem Abgassammelbehälter abfliessen oder es kann eine Absauganlage angeschlossen werden, welche das Abgas in den Entsorgungstank saugt.

Das Abgasentsorgungssystem nach der Erfindung umfasst vorteilhaft eine Vielzahl von Nachbehandlungsvorrichtungen, die jeweils in einem Verbrennungsmotor-Kraftfahrzeug verwendet werden, so dass das Abgasentsorgungssystem eine Vielzahl von Fahrzeugen erfassen und deren Abgase sammeln und entsorgen kann. Ferner wird vorteilhaft eine Vielzahl von Entsorgungstanks an weit verteilten Standorten bereit gestellt, so dass gesammeltes Abgas an unterschiedlichen Standorten entsorgt werden kann. Somit wird die Umwelt von den Abgasen einer Vielzahl von Fahrzeugen entlastet.

Vorteilhaft wird bei einer erfindungsgemässen Verwendung der oben beschriebenen Nachbehandlungsvorrichtung das Abgas in dem Abgassammelbehälter gesammelt und gekühlt. Wird das Fahrzeug nicht mehr gebraucht, wird der Motor abgestellt und es wird kein weiteres heisses Verbrennungsabgas mehr in den Abgassammelbehälter eingeleitet. Deshalb können sich der Abgassammelbehälter und das darin gesammelte Abgas weiter abkühlen. Das Kältemedium im Kühlbehälter der Nachbehandlungsvorrichtung ist vorteilhaft derart ausgebildet, dass nach Gebrauch des Fahrzeugs, d. h. nach einem Abstellen des Verbrennungsmotors, das nachbehandelte, gekühlte Abgas im Abgassammelbehälter soweit weiter abgekühlt wird, dass es verflüssigt wird. Das verflüssigte Abgas wird dann aus dem Abgassammelbehälter in einen Entsorgungstank entsorgt. Dadurch kann ein einfaches Abführen von Abgas aus dem Fahrzeug und ein effizientes Entsorgen der Abgase erfolgen.

Im Zusammenhang mit der Nachbehandlungsvorrichtung beschreibt der Begriff "Innenraum des Kühlbehälters" einen Leerraum zwischen dem ersten Behälter und dem zweiten Behälter der Nachbehandlungsvorrichtung, der ein Volumen zur Aufnahme des Kältemediums bildet. Vorteilhaft ist der Abgassammelbehälter mit im Wesentlichen freiliegender Umfangsfläche im zweiten Behälter gelagert. Bevorzugt ist im Wesentlichen die gesamte Aussenfläche des Abgassammelbehälters freiliegend im Kühlbehälter vorgesehen. Der Abgassammelbehälter ist z. B. lediglich über den Einlass und den Auslass mit dem Kühlbehälter verbunden. Es können auch Stützen oder Streben zwischen dem Abgassammelbehälter und dem Kühlbehälter vorgesehen sein, um den Abgassammelbehälter sicher im Kühlbehälter zu halten, die jedoch nur eine geringe Angriffsfläche am Abgassammelbehälter benötigen.

In einer Ausführungsform der Nachbehandlungsvorrichtung nach der vorliegenden Erfindung weist der Kühlbehälter wenigstens eine Zuleitung für das Kältemedium auf, die für einen Austausch des Kältemediums ausgelegt ist. Über die Zuleitung kann Kältemedium im Kühlbehälter nachgefüllt oder ersetzt werden. Vorteilhaft wird das Kältemedium im Kühlbehälter periodisch erneuert. Das kann allein über eine einzige Zuleitung erfolgen, oder es können zwei oder mehr Zuleitungen vorgesehen sein, so dass ein Kreislauf des Kältemediums möglich ist.

Das Kältemedium kann über die Zuleitung auch vollständig aus dem Kühlbehälter abgeführt und es kann ein neues oder anderes Kältemedium in den Leerraum eingefüllt werden. Auf diese Weise, kann abgestimmt auf die Zusammensetzung und Temperatur eines Abgases eines Verbrennungsmotors ein optimales Kältemedium in der Nachbehandlungsvorrichtung verwendet werden.

Vorteilhaft wird das Kältemedium so gewählt, dass es den Abgassammelbehälter derart kühlt, dass das Abgas in nachbehandeltem Zustand in einem flüssigen Zustand vorliegt, oder zumindest nach Abschalten einer Zufuhr von heissem Abgas in den Abgassammelbehälter und damit einhergehender Abkühlung im Abgassammelbehälter in einen flüssigen Zustand über geht. In einem flüssigen nachbehandelten Zustand weist das Abgas ein geringes Volumen auf und kann in einfacher Weise aus dem Abgassammelbehälter abfliessen.

In einer Ausführungsform der Nachbehandlungsvorrichtung ist eine Zuleitung zum Kühlbehälter vorgesehen, die ein Rückschlagventil aufweist. Das Rückschlagventil blockiert ein Entweichen des Kältemediums aus dem Kühlbehälter. Dabei ist die Dimensionierung des Rückschlagventils auf den Druck des Kältemediums im Kühlbehälter abgestimmt. Beispielsweise kann das Rückschlagventil dazu ausgelegt sein, einen Druck zwischen etwa 6 bar und etwa 74 bar zu haben. Um das Kältemedium im Kühlbehälter auszutauschen, kann das Rückschlagventil geöffnet werden. Mit Hilfe des Rückschlagventils kann das Kältemedium im Kühlbehälter typischerweise von einer geschulten Person periodisch ausgewechselt werden.

In einer vorteilhaften Ausführungsform der Nachbehandlungsvorrichtung nach der vorliegenden Erfindung liegt als Kältemedium ein Kohlendioxid-Gas vor. Das Kohlendioxid-Gas wird unter Druck im Innenraum des Kühlbehälters gelagert, so dass es kühlend auf die Aussenfläche des Abgassammelbehälters und somit auf das Abgas wirkt. Der Druck im Kühlbehälter kann so ausgelegt sein, dass das Kohlendioxid-Gas komprimiert vorliegt. Typischerweise ist der Druck im Kühlbehälter abhängig von dessen Volumen. Beispielsweise liegt im Kühlbehälter mit dem Kohlendioxid-Gas ein Druck im Bereich von zwischen etwa 55 bar bis etwa 74 bar vor. Die Temperatur im Kühlbehälter kann kühlend auf den Abgassammelbehälter wirken. Kohlendioxid-Gas ist nicht brennbar und kostengünstig im Verbrauch. Es eignet sich daher besonders für den Einsatz als Kältemedium in der Nachbehandlungsvorrichtung nach der Erfindung. Grundsätzlich können aber auch andere Kältemedium verwendet werden, wie z. B. Kohlenwasserstoffe.

In einer weiteren Ausführungsform der Nachbehandlungsvorrichtung nach der Erfindung ist im Einlass und im Auslass des Abgassammelbehälter jeweils ein Rückschlagventil vorgesehen, um das Abgas in dem Behälter zurückzuhalten. Die Dimensionierung des Rückschlagventils ist dabei bevorzugt auf den Abgasdruck abgestimmt, wie er von dem Verbrennungsmotor in der Auspuffanlage erzeugt wird. Somit kann das Abgas über den Einlass in den Abgassammelbehälter gelangen aber nicht zurück Richtung Motor fliessen. Eine Beeinträchtigung der Motorfunktion durch zurückgestautes Abgas wird somit vermieden. Weiter wird das Abgas in dem Abgassammelbehälter gehalten, bis das Rückschlagventil im Auslass geöffnet wird. Auf diese Weise wird das Abgas sicher im Abgassammelbehälter eingeschlossen und wird vom Ausgangszustand in den nachbehandelten Zustand umgewandelt. Vorteilhaft sind der Auslass und vorzugsweise auch der Auslassanschluss in einem unteren Bereich von Abgassammelbehälter und Kühlbehälter angeordnet, so dass der Auslass nach unten ausgerichtet ist. Die Beschreibung "unterer Bereich" und "nach unten" ist dabei in Fliessrichtung derart zu verstehen, dass ein verflüssigtes Abgas durch Gravitation selbständig aus dem Behälter abfliesst.

In noch einer weiteren Ausführungsform der Nachbehandlungsvorrichtung nach der Erfindung sind der Abgassammelbehälter und der Kühlbehälter jeweils länglich ausgebildet und weisen eine kreisförmige oder ovale Umfangswand auf. Der Innenraum des Kühlbehälters umgibt somit den Abgassammelbehälter in ringartiger Form und das Kältemedium kann ringsum zirkulieren. Eine kreisförmige oder ovale Umfangswand bildet zudem eine stabile Struktur der Behälter, so dass diese dem Druck des Kältemedium und des Abgases standhalten. In einer vorteilhaften Variante sind der Abgassammelbehälter und der Kühlbehälter dezentriert ineinander gelagert sind. Die Behälter sind somit derart ineinander ausgerichtet, dass ein Abstand zwischen einer Umfangswand des Abgassammelbehälters und einer Umfangswand des Kühlbehälters in einem oberen Bereich grösser ist, als in einem gegenüberliegenden unteren Bereich. Im oberen Bereich des Abgassammelbehälters sammelt sich Abgas höherer Temperatur an als im unteren Bereich. Durch die dezentrale Lage der Behälter kann sich aber im oberen Innenbereich des Kühlbehälters mehr Kältemedium aufhalten, so dass dort an besserer Kälteeffekt auf den Abgassammelbehälter wirkt. Somit wird die Abkühlung des Abgases im Abgassammelbehälter unterstützt.

In einer Ausführungsform der Nachbehandlungsvorrichtung nach der Erfindung umfasst der erste und/oder der zweite Behälter, d. h. der Abgassammelbehälter und/oder der Kühlbehälter, eine innere Struktur zur Schalldämpfung. Eine solche Schalldämpferstruktur kann z. B. die Ausgestaltung eines Absorptionsschalldämpfers oder eines Reflexionsschalldämpfers haben. Insbesondere im Abgassammelbehälter können mehrere hintereinander liegende und miteinander verbundene Kammern ausgebildet sein, die einen Schall absorbieren, der von einem Abgasstrom durch die Auspuffanlage transportiert wird. Ferner können z. B. im Innenraum des Kühlbehälters poröse Schalldämpfermaterialien vorliegen. Die Nachbehandlungsvorrichtung bildet somit eine Kombination aus Nachbehandlung von Abgasen und Schallreduzierung. Ein zusätzlicher Schalldämpfer ist daher in der Auspuffanlage nicht notwendig.

Wie oben beschrieben, kann die Nachbehandlungsvorrichtung nach der Erfindung vorteilhaft in einem System zur Entsorgung von Abgas aus Verbrennungsmotoren verwendet werden.

Besonders vorteilhaft weist das Entsorgungssystem nach der vorliegenden Erfindung wenigstens eine Zapfeinheit zum Zapfen von Treibstoff für den Verbrennungsmotor, wenigstens eine Abführleitung zum Verbinden des Auslasses eines Abgassammelbehälters mit dem wenigstens einen Entsorgungstank auf. Vorzugsweise sind die Abführleitung und die Zuführleitung an der Zapfeinheit vorgesehen. Ein Fahrzeughalter kann somit während eines Serviceaufenthalts an einer Zapfeinheit gleichzeitig Treibstoff tanken und nachbehandeltes Abgas entsorgen. Bevorzugt umfasst das Entsorgungssystem eine Vielzahl von weit verteilten Zapfeinheiten, so dass dieser Service an einer Vielzahl von Orten durchgeführt werden kann. Es ist somit für einen Fahrzeughalter kein zusätzlicher Wartungsaufenthalt erforderlich, um eine Freisetzung von Schadstoffen aus dem Gebrauch seines Kraftfahrzeugs zu vermeiden. Idealerweise kann für das Entsorgungssystem nach der Erfindung ein bestehendes Netzwerk von Tankstellen mit Zapfeinheiten genutzt werden.

Vorzugsweise umfasst die Nachbehandlungsvorrichtung eine an den ersten Behälter gekoppelte Druckerhöhungseinrichtung, wobei die Druckerhöhungseinrichtung zur Erhöhung eines Druckes im ersten Behälter ausgestaltet ist. Die Druckerhöhungseinrichtung kann ein beliebiges technischen Gerät wie beispielsweise einen Kompressor oder ein Druckwechselrichter aufweisen. Mittels der Druckerhöhungseinrichtung kann das bereits abgekühlte Abgas aktiv weiter komprimieren, sodass das Abgasvolumen im Abgassammelbehälter beziehungsweise im ersten Behälter noch geringer wird.

Mit einer Nachbehandlungsvorrichtung und einem Entsorgungssystem nach der Erfindung kann die Freisetzung von Abgas mit Schadstoffen, die aus der Verbrennung von Treibstoff in Verbrennungsmotoren resultieren, vermieden werden. Dies schont die Umwelt, verhindert eine negative Beeinträchtigung des Klimas und vermeidet gesundheitliche Schäden, wie es durch die Schadstoffe entstehen könnte. Der Aufbau der Nachbehandlungsvorrichtung ist einfach und kostengünstig und sie kann ohne grosse bauliche Veränderungen in eine bestehende Auspuffanlage integriert werden.

### Kurze Beschreibung der Zeichnungen

Eine vorteilhafte Ausgestaltung der Erfindung ergibt sich aus der nachfolgenden Beschreibung eines Ausführungsbeispiels der Erfindung mit Hilfe der schematischen Zeichnung. Insbesondere wird im Folgenden die erfindungsgemässe Nachbehandlungsvorrichtung unter Bezugnahme auf die beigefügten Zeichnungen anhand von Ausführungsbeispielen detailliert beschrieben. Es zeigen:
- Fig. 1: eine Längsaufsicht auf eine erste Ausführungsform eines Nachbehandlungsvorrichtung nach der vorliegenden Erfindung und
- Fig. 2: eine schematische Rückansicht auf eine zweite Ausführungsform eines Nachbehandlungsvorrichtung nach der vorliegenden Erfindung.

### Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Bauteile zueinander, der Bewegung bezeichneter Bauteile zueinander und der Richtungen hin zum oder weg von geometrischem geometrischen Zentrum der Erfindung sowie benannter Bauteile derselben wie in den Figuren dargestellt verwendet. Diese räumlichen Relativangaben umfassen auch andere Positionen und Ausrichtungen als die in den Fig. dargestellten. Zum Beispiel wenn ein in den Fig. dargestelltes Bauteil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsformen zu vermeiden, sollen bestimmte Merkmale als gemeinsam für verschieden Aspekte und Ausführungsformen verstanden werden. Das Weglassen eines Aspekts in der Beschreibung oder einer Figur lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Figuren stehen für ähnliche oder gleiche Elemente.

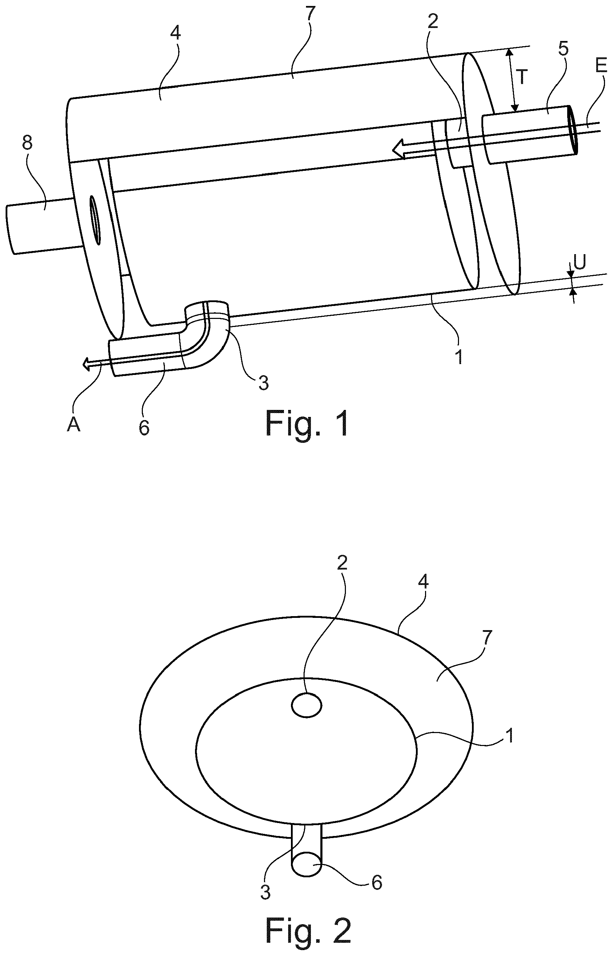

Fig. 1 zeigt eine Ausführungsform einer Nachbehandlungsvorrichtung zur Nachbehandlung von Abgas aus einem Verbrennungsmotor nach der vorliegenden Erfindung. Diese Nachbehandlungsvorrichtung weist einen ersten Behälter zur Aufnahme von Abgas als Abgassammelbehälter 1 auf, der einen Einlass 2 zum Einführen von Abgas aus einem Verbrennungsmotor (nicht gezeigt) und einen Auslass 3 zum Abführen von in dem Abgassammelbehälter 1 nachbehandeltem Abgas aufweist. Der Abgassammelbehälter 1 ist innerhalb eines zweiten Behälters 4 untergebracht, der einen Einlassanschluss 5 und einen Auslassanschluss 6 aufweist. Der zweite Behälter 4 kann als Kühlbehälter bezeichnet werden. Der Einlass 2 des Abgassammelbehälters 1 ist mit dem Einlassanschluss 5 des Kühlbehälters 4 und der Auslass 3 des Abgassammelbehälters 1 ist mit dem Auslassanschluss 6 des Kühlbehälters verbunden. Ein erster Pfeil E zeigt die Einlassrichtung eines von einem Verbrennungsmotor kommenden Abgases durch den Kühlbehälter 4 hindurch in den Abgassammelbehälter 1. Zum Einleiten des Abgases kann der Einlassanschluss 5 zum Beispiel an eine Auspuffanlage eines Kraftfahrzeuges angeschlossen sein, die von dem Verbrennungsmotor des Fahrzeugs erzeugtes Abgas auffängt. Ein zweiter Pfeil A zeigt die Auslassrichtung eines im Abgassammelbehälter 1 nachbehandelten Abgases durch den Auslassanschluss 6 und durch den Kühlbehälter 4 hindurch nach aussen aus der Nachbehandlungsvorrichtung. Der Auslassanschluss 6 kann zum Beispiel an einen Entsorgungstank (nicht gezeigt) angeschlossen werden, um das nachbehandelte Abgas aus dem Kraftfahrzeug abzuführen und fachgerecht zu verarbeiten.

Für eine Nachbehandlung des Abgases in dem Abgassammelbehälter 1 ist in dem Kühlbehälter 4 ein Kältemedium in einem Innenraum 7 des Kühlbehälters 4 vorgesehen. In der gezeigten Ausführungsform weist die Nachbehandlungsvorrichtung eine Zuleitung 8 auf, um Kältemedium in den Kühlbehälter 4 ein- und ausleiten zu können. Das Kältemedium ist zum Kühlen des Abgassammelbehälter 1, bzw. des darin gesammelten Abgases, derart ausgelegt, dass das Abgas von einem Ausgangszustand mit einem Ausgangsvolumen in einen nachbehandelten Zustand überführbar ist, in welchem das Abgasvolumen geringer ist als das Ausgangsvolumen. Das ursprüngliche Volumen des mit hoher Temperatur aus dem Verbrennungsmotor entweichenden Abgases wird daher im Kühlbehälter 4 durch Verringerung der Temperatur, d. h. durch Reduzierung der kinetischen Energie, reduziert. Vorteilhaft wird das Abgasvolumen soweit reduziert, dass eine Menge an Abgas im Abgassammelbehälter gesammelt werden kann, die einer Verbrennung einer Treibstoffmenge entspricht, wie sie in einem Tank des Kraftfahrzeugs aufgenommen werden kann. Die Nachbehandlungsvorrichtung kann somit vorteilhaft das Abgas aufnehmen, das bei der Verbrennung einer gesamten Tankfüllung entsteht.

Bei der Reduzierung des Abgasvolumens vom Ausgangszustand in den nachbehandelten Zustand kann das Abgas im selben gasförmigen Aggregatzustand verbleiben. Vorteilhaft ist jedoch das Kältemedium derart ausgebildet, dass es das im Abgassammelbehälter 1 befindliche Abgas unter einem gegebenen Druck soweit abkühlen kann, dass das Abgas im nachbehandelten Zustand in einem flüssigen Aggregatzustand vorliegt. Im flüssigen Zustand weist das nachbehandelte Abgas ein sehr geringes Volumen auf und kann in einfacher Weise durch Abfliessen aus dem Abgassammelbehälter 1 entsorgt werden.

Vorteilhaft kann in der Zuleitung 8 des Kühlbehälters 4 ein Rückschlagventil (nicht gezeigt) vorgesehen sein, das ein Entweichen des Kältemediums aus dem Kühlbehälter 4 blockiert. Das Kältemedium wird im Kühlbehälter 4 mit einem Druck vorgesehen, der auf das verwendete Kältemedium und den Ausgangszustand des Abgases abgestimmt ist. In der Regel wird das Kältemedium mit einem relativ hohen Druck im Kühlbehälter 4 vorgesehen, um eine hohe Kühlwirkung zu erreichen. Zum Austauschen oder Nachfüllen von Kältemedium kann die Zuleitung 8 an ein Reservoir für Kältemedium angeschlossen und das Rückschlagventil kann geöffnet werden. Grundsätzlich ist es auch denkbar, die Zuleitung 8 an einen Kreislauf für das Kältemedium anzuschliessen.

Als Kältemedium für die Nachbehandlungsvorrichtung nach der Erfindung wird ein Kohlendioxid-Gas empfohlen. Kohlendioxid-Gas ist günstig, weist in komprimiertem Zustand stark kühlende Eigenschaften auf, ist nicht brennbar und explodiert nicht.

Vorteilhaft ist auch in dem Einlass 2 und dem Auslass 3, bzw. dem Auslassanschluss 6 jeweils ein Rückschlagventil (nicht gezeigt) vorgesehen, um das Abgas im Abgassammelbehälter 1 zurückzuhalten und einen Rückstau in den Motor zu verhindern. Zumindest das Rückschlagventil im Auslass 3, bzw. im Auslassanschluss 6, kann geöffnet werden, um nachbehandeltes Abgas aus dem Abgassammelbehälter 1 abzuführen.

Während in der Ausführungsform der Nachbehandlungsvorrichtung aus Figur 1 der Abgassammelbehälter 1 und der Kühlbehälter 4 im Wesentlichen zylindrisch mit einem im Wesentlichen kreisförmigen Querschnitt ausgebildet sind, weisen diese in der in Figur 2 gezeigten Ausführungsform einen im Wesentlichen ovalen Querschnitt auf.

Bei beiden Ausführungsformen sind der Abgassammelbehälter 1 und der Kühlbehälter 4 länglich ausgebildet, so dass sie im Wesentlichen in Längsrichtung einer Auspuffanlage in diese integriert werden können. Weiter ist der Abgassammelbehälter 1 mit im Wesentlichen freiliegender Umfangsfläche im Kühlbehälter 4 gelagert. Zudem sind sich gegenüberliegende Frontflächen des Abgassammelbehälters 1 und des Kühlbehälters 4, welche die jeweiligen Umfangsflächen abschliessen, von einander beabstandet gelagert. Demnach bildet sich in dem Innenraum 7 des Kühlbehälters 4 ein Leerraum um den Abgassammelbehälter 1 aus, so dass dessen gesamte Aussenfläche zumindest annähernd freiliegend im Kühlbehälter 4 gelagert ist und in Kontakt mit dem Kältemedium steht.

In den gezeigten Ausführungsformen ist der Abgassammelbehälter 1 mittels des Einlassanschlusses 5 und des Auslassanschlusses 6, die beispielsweise als Rohrleitungen ausgebildet sind, im Kühlbehälter 4 gehalten. Dabei greift der Einlassanschluss 5 an einer Frontfläche des Abgassammelbehälters 1 an und verbindet diese mit der gegenüberliegenden Frontfläche des Kühlbehälters 4. Die Rohrleitung des Einlassanschlusses 5 kann dabei auch in den Abgassammelbehälter 1 hineinragen. Dadurch eine Verteilung des einströmenden Abgases im Abgassammelbehälter verbessert. Der Auslassanschluss 6 greift an einer Umfangswand des Abgassammelbehälters 1 an und ist an einem Ende des Abgassammelbehälters 1 vorgesehen, das dem Ende mit dem Einlassanschluss 5 gegenüberliegt. Somit ist der Abgassammelbehälter 1 an seinen sich gegenüberliegenden Enden gehalten.

Ferner sind in den gezeigten Ausführungsformen der Figuren 1 und 2 der Abgassammelbehälter 1 und der Kühlbehälter 4 dezentriert ineinander gelagert und zwar derart, dass der innenliegende Abgassammelbehälter 1 nach unten versetzt von einer Mittelachse des Kühlbehälters 4 angeordnet ist. Wie in den Figuren gezeigt, ist der Abgassammelbehälter 1 in der Bildebene nach unten versetzt. Die Bezeichnung "nach unten versetzt" bedeutet in diesem Zusammenhang auch, dass der innere Behälter in Richtung seiner Gravitation nach unten verlagert ist. Demnach kommen schwere, bzw. kühlere Bestandteile des Abgases in einem unteren Bereich des Abgassammelbehälter 1 zu liegen und leichtere, bzw. heissere Bestandteil in einem oberen Bereich davon. Aus der dezentralen Anordnung ergibt sich auch, dass ein Abstand U zwischen den Umfangswänden der Behälter 1 und 4 im unteren Bereich der Nachbehandlungsvorrichtung kleiner ist als ein Abstand T im gegenüberliegenden oberen Bereich. Demnach umgibt den oberen Bereich des Abgassammelbehälters 1, in dem die heisseren Bestandteile des Abgases vorliegen, eine dichtere gasförmige Kältemediumsschicht als den unteren Bereich, in dem kältere Bestandteile des Abgases lagern. Dadurch kann der Kühleffekt des Kältemediums zur Nachbehandlung des Abgases verbessert werden.

Vorteilhaft sind bei den gezeigten Ausführungsformen der Auslass 3 des Abgassammelbehälters 1 und auch der Auslassanschluss 6 in einem unteren Bereich der Behälter angeordnet und nach unten ausgerichtet, so dass das Abgas in nachbehandeltem und somit schwerem Zustand aufgrund von Gravitation am Auslass zu liegen kommt. Durch leichtes Kippen des Endes des Abgassammelbehälters 1 mit dem Auslass 3 nach unten aus der horizontalen Lage wird nachbehandeltes Abgas zuverlässig über dem Auslass 3 gesammelt. Sobald der Auslassanschluss 6 an einen Entsorgungstank angeschlossen ist, kann dann das Rückschlagventil geöffnet und das nachbehandelte, vorzugsweise flüssige Abgas entsorgt werden. Somit ist der Abgassammelbehälter für eine erneute Aufnahme von Abgas aus dem Verbrennungsmotor bereit.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen.

Insbesondere deckt die vorliegende Erfindung weitere Ausführungsbeispiele und Anwendungen der gezeigten Nachbehandlungsvorrichtungen mit weiteren Merkmalen oder Kombinationen von Merkmalen ab. Beispielsweise kann die Erfindung auch in folgenden Varianten realisiert sein:
- Die Nachbehandlungsvorrichtung ist vertikal ausgerichtet. Demnach kann sie z. B. vorteilhaft auch in vertikal orientierten Auspuffanlagen von Kraftfahrzeugen eingesetzt werden.
- Die Nachbehandlungsvorrichtung weist einen Kühlbehälter mit mehreren Kammern auf, die miteinander verbunden sind oder jeweils mit Kältemedium versorgt werden. Somit kann ein Kältemedium oder können verschiedene Kältemedien auf unterschiedliche Bereiche eines Abgassammelbehälters individuell einwirken.
- Die Nachbehandlungsvorrichtung kann auch bei Verbrennungsmotoren vorteilhaft eingesetzt werden, die nicht für den Betrieb von Strassenkraftfahrzeugen vorgesehen sind, wie beispielsweise für Verbrennungsmotoren in Zügen oder Schiffen.
- Die Nachbehandlungsvorrichtung kann in Kombination mit einer schalldämpfenden Struktur im Inneren des Abgassammelbehälters und/oder des Kühlbehälters realisiert sein. Die schalldämpfende Struktur kann dabei vorteilhaft derart ausgebildet sein, das Kältemedium im Innenraum des Kühlbehälters zuverlässig zum Abgassammelbehälter geleitet wird. Hierfür können z. B. Lamellen oder Faserstrukturen vorgesehen sein. Weiter kann eine schalldämpfende Mehrkammer-Struktur im Abgassammelbehälter das Ableiten oder Trennen von Abgasanteilen unterstützen und damit das Abkühlen fördern. Grundsätzlich wäre aus auch denkbar einen herkömmlichen Schalldämpfer mit einem Abgassammelbehälter und einem Kühlbehälter im Sinne der Erfindung zu erweitern.

Insbesondere bildet eine Nachbehandlungsvorrichtung, wie in den Figuren 1 und 2 gezeigt, eine Grundlage für ein System zur Entsorgung von Abgasen aus einer Vielzahl von Verbrennungsmotoren und für ein Netzwerk von Entsorgungstanks, um Abgase, die in Zusammenhang mit Personen- und Gütertransport entstehen, weitreichend auffangen und entsorgen zu können, wie eingangs beschrieben.

Letztlich wird festgehalten, dass der Ausdruck "umfassen" und Ableitungen davon andere Bauteile oder Schritte nicht ausschliesst. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr", "annähernd" und dergleichen in Verbindung mit einer Eigenschaft beziehungsweise einem Wert definieren insbesondere auch genau die Eigenschaft beziehungsweise genau den Wert.

### Verwendete Bezugszeichen

- 1: Abgassammelbehälter
- 2: Einlass Abgassammelbehälter
- 3: Auslass Abgassammelbehälter
- 4: Kühlbehälter
- 5: Einlassanschluss
- 6: Auslassanschluss
- 7: Innenraum
- 8: Zuleitung Kältemedium

- E: Einlassrichtung
- A: Auslassrichtung
- U: Abstand unten
- T: Abstand oben

## Patentansprüche

1. Nachbehandlungsvorrichtung zur Nachbehandlung von Abgas aus einem Verbrennungsmotor, die einen ersten Behälter (1) zur Aufnahme von Abgas, ein Kältemedium und einen zweiten Behälter (4) umfasst, wobei
der erste Behälter (1) einen Einlass (2) zum Einführen von Abgas aus dem Verbrennungsmotor und einen Auslass (3) zum Abführen von nachbehandeltem Abgas aufweist,
der zweite Behälter (4) mit einem Innenraum (7), einem Einlassanschluss (5) und einem Auslassanschluss (6) ausgestattet ist,
der erste Behälter (1) im zweiten Behälter (4) untergebracht ist,
der Einlass (2) des ersten Behälters (1) mit dem Einlassanschluss (5) des zweiten Behälters (4) und der Auslass (3) des ersten Behälters (1) mit dem Auslassanschluss (6) des zweiten Behälters (4) verbunden sind, und
das Kältemedium derart im Innenraum (7) des zweiten Behälters (4) vorgesehen ist, dass im ersten Behälter (1) gesammeltes Abgas von einem Ausgangszustand mit einem Ausgangsvolumen in einen nachbehandelten Zustand mit einem Volumen geringer als das Ausgangsvolumen überführbar ist.

2. Nachbehandlungsvorrichtung gemäss Anspruch 1, wobei der erste Behälter (1) mit im Wesentlichen freiliegender Umfangsfläche im Innenraum (7) des zweiten Behälters (4) gelagert ist.

3. Nachbehandlungsvorrichtung gemäss Anspruch 1 oder 2, wobei das Kältemedium den ersten Behälter (1) derart kühlt, dass das im ersten Behälter (1) gesammelte Abgas im nachbehandelten Zustand zumindest teilweise in flüssiger Form vorliegt.

4. Nachbehandlungsvorrichtung gemäss einem der vorangehenden Ansprüche, wobei der zweite Behälter (4) eine Zuleitung (8) aufweist, die für einen Austausch des Kältemediums ausgelegt ist und vorzugsweise das Entweichen des Kältemediums aus dem zweiten Behälter (4) verhindert.

5. Nachbehandlungsvorrichtung gemäss einem der vorangehenden Ansprüche, wobei das Kältemedium ein Kohlendioxidgas umfasst.

6. Nachbehandlungsvorrichtung gemäss einem der vorangehenden Ansprüche, wobei im Einlass (2) des ersten Behälters (1) und im Auslass (3) des ersten Behälters (1) jeweils ein Rückschlagventil vorgesehen ist, um das Abgas im ersten Behälter (1) zu halten.

7. Nachbehandlungsvorrichtung gemäss Anspruch 8, wobei der erste Behälter dazu ausgelegt ist, dass das Rückschlagventil im Einlass (2) des ersten Behälters (1) durch einen Abgasdruck des Verbrennungsmotors geöffnet zu werden, sodass das Abgas des Verbrennungsmotors in den ersten Behälter eintritt.

8. Nachbehandlungsvorrichtung gemäss einem der vorangehenden Ansprüche, wobei der Auslass (3) des ersten Behälters in einem unteren Bereich des ersten Behälters (1) angeordnet und nach unten ausgerichtet ist.

9. Nachbehandlungsvorrichtung gemäss einem der vorangehenden Ansprüche, wobei der erste Behälter (1) und der zweite Behälter (4) jeweils länglich ausgebildet sind und eine im Querschnitt kreisförmige oder ovale Umfangswand aufweisen.

10. Nachbehandlungsvorrichtung gemäss einem der vorangehenden Ansprüche, wobei der erste Behälter (1) und der zweite Behälter (4) jeweils länglich ausgebildet und dezentriert ineinander gelagert sind.

11. Nachbehandlungsvorrichtung gemäss einem der vorangehenden Ansprüche, wobei der erste Behälter (1) und/oder der zweite Behälter (4) eine innere Struktur zur Schalldämpfung umfassen.

12. Nachbehandlungsvorrichtung gemäss einem der vorangehenden Ansprüche, die eine an den ersten Behälter (1) gekoppelte Druckerhöhungseinrichtung umfasst, wobei die Druckerhöhungseinrichtung zur Erhöhung eines Druckes im ersten Behälter (1) ausgestaltet ist.

13. System zur Entsorgung von Abgas aus einem Verbrennungsmotor, das wenigstens eine Nachbehandlungsvorrichtung nach einem der vorherigen Ansprüche und wenigstens einen Entsorgungstank umfasst, wobei der erste Behälter (1) der wenigstens einen Nachbehandlungsvorrichtung zur Entsorgung des nachbehandelten Abgases an den wenigstens einen Entsorgungstank anschliessbar ist.

14. System gemäss Anspruch 13, das wenigstens eine Zapfeinheit zum Zapfen von Treibstoff für den Verbrennungsmotor, wenigstens eine Abführleitung zum Verbinden des Auslasses (3) eines ersten Behälters (1) mit dem wenigstens einen Entsorgungstank.

15. Verwendung einer Nachbehandlungsvorrichtung zur Nachbehandlung von Abgas aus einem Verbrennungsmotor nach einem der Ansprüche 1 bis 13 zum Entsorgen von Abgas des Verbrennungsmotors, wobei das Abgas in dem ersten Behälter (1) gesammelt und gekühlt wird, das gekühlte Abgas nach dem Gebrauch des Verbrennungsmotors in dem ersten Behälter (1) verflüssigt wird und das verflüssigte Abgas aus dem ersten Behälter (1) in einen Entsorgungstank entsorgt wird.
